Europäisches Patentamt

(19) European Patent Office

Office européen des brevets

(11) EP 0 422 817 B1

(12) EUROPEAN PATENT SPECIFICATION

(45) Date of publication and mention
of the grant of the patent:
02.01.1997 Bulletin 1997/01

(51) Int. Cl.$^6$: **A61B 6/02**, H05G 1/64

(21) Application number: 90310765.4

(22) Date of filing: 02.10.1990

(54) **A digital X-ray image read apparatus with a correction function**

Digitales Röntgenstrahl-Bildschirmgerät mit einer Korrekturfunktion

Appareil numérique d'image radiologique à rayons-X avec une fonction de correction

(84) Designated Contracting States:
**DE FR GB**

(30) Priority: **02.10.1989 JP 255265/89**

(43) Date of publication of application:
**17.04.1991 Bulletin 1991/16**

(73) Proprietor: **FUJITSU LIMITED**
**Kawasaki-shi, Kanagawa 211 (JP)**

(72) Inventors:
• **Takeda, Shiro**
  **Sagamihara-shi, Kanagawa, 229 (JP)**
• **Namiki, Fumihiro**
  **Machida-shi, Tokyo 194-01 (JP)**
• **Yamada, Isamu**
  **Kawasaki-shi, Kanagawa 213 (JP)**

(74) Representative: **Fane, Christopher Robin King et al**
**HASELTINE LAKE & CO.**
**Hazlitt House**
**28 Southampton Buildings**
**Chancery Lane**
**London, WC2A 1AT (GB)**

(56) References cited:
**EP-A- 0 126 218        DE-A- 3 332 648**
**DE-A- 3 803 766**

• **PATENT ABSTRACTS OF JAPAN, vol. 10, no. 95 (E- 395)(2152), 12 April 1986 & JP-A-60 236 566**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a digital X-ray image read apparatus, more particularly, it relates to a digital X-ray image read apparatus with a correction function for correcting an X-ray image after A/D conversion. A digital X-ray image read apparatus embodying the present invention is primarily intended for use in the field of medical equipment.

An X-ray apparatus is widely used in various fields, particularly in the medical field. As a conventional X-ray apparatus having high sensitivity and high resolution, there is a digital X-ray image read apparatus that displays an X-ray image on a cathode-ray tube (CRT) instead of a radiograph.

The above conventional digital X-ray image read apparatus (see, for example, U.S. Patent No. 3,859,527) uses a photostimulable phosphor plate constituted by a sheet-like fluorescence medium which is able to accumulate a part of the X-ray energy. This fluorescence medium accumulating the X-ray energy is called an "accumulative fluorescence body". The accumulative fluorescence body can accumulate X-ray energy for a relatively long time.

In general, a digital X-ray image can be obtained by the following steps. That is, when X-rays are irradiated onto an object (for example, a human body), the X-rays transmitted through the object expose the photostimulable phosphor plate. When the photostimulable phosphor plate is scanned by an excitation beam (for example, a laser beam), the energy accumulated on the fluorescence body is excited by the laser beam and a fluorescent light corresponding to the accumulated energy is emitted from the photostimulable phosphor plate.

The fluorescent light is collected by collection equipment, for example, bundled optical fibers, and converted to analog electrical signals by an optical-to-electrical converter. Further, the analog electrical signals are converted to digital signals to provide a digital X-ray image on the CRT.

Next, a doctor reads the X-ray image displayed on the CRT. This read operation by the doctor is called an "actual read". That is, the actual read, in this case, means that the doctor reads the X-ray image displayed on the monitor image when diagnosing the object. For the photographic conditions during the actual read, it is necessary to determine a supply voltage for an X-ray tube, a multiplication rate of a photomultiplier, an amplification rate of the amplifier, and a distance between the X-ray tube and the object.

Apparatus of the above kind, for reading an X-ray image recorded on a photostimulable phosphor plate, is disclosed, for example, in EP-A-0126218, which can be considered to comprise: an excitation beam generation source for causing an excitation beam to scan repeatedly over such a plate, so as to be incident at different times at different points on the plate in the course of each scan, such scanning serving to stimulate emission by the plate of fluorescent light in dependence upon the image information of pixels of the said X-ray image corresponding respectively to the said different points on the plate; light collection means for collecting the fluorescent light emitted from the plate during such scanning; photomultiplier means connected to the said light collection means for multiplying the collected fluorescent light and for converting the multiplied collected light corresponding to the image information of each pixel in turn into an electrical signal; and an analog-to-digital converter operatively connected to the photomultiplier means for converting the resulting electrical signals into corresponding digital image-data values representative of the said image information of the said pixels.

There is, however, a problem in the above conventional apparatus. This problem is the fact that the actual read must be performed many times when diagnosing the object. This problem is caused by an afterglow of the fluorescent light from the photostimulable phosphor plate. That is, the afterglow of the fluorescent light occurs for a long time just after the irradiation of the excitation beam is stopped.

In this case, the amount of the fluorescent light produced when the plate is irradiated by a subsequent excitation beam is defined by the sum of the fluorescent light at that time and the afterglow arising from previous irradiations. Accordingly, it is difficult to determine the precise amount of fluorescent light at that time.

Accordingly, it is necessary to wait for a relatively long time until all afterglow attenuates to a predetermined light level.

The object of the present invention is to provide a digital X-ray image read apparatus with a correction function enabling correction of the X-ray image, and high speed reading of the X-ray image during the actual read operation when diagnosing an object.

According to the present invention, the apparatus further includes correction means operatively connected to the said analog-to-digital converter and operable to produce a corrected data value $Q_n$ for each pixel based on the formula:

$$Q_n = S_n - S_{n-1} \exp [\Delta t/\tau]$$

where:

$\tau$      is the time constant for attenuation of an afterglow of the photostimulable phosphor plate;

$S_n$      is the image-data value for the pixel concerned as measured in each scan of the plate;

$S_{n-1}$      is the image-data value for the pixel immediately preceding the pixel concerned as measured in each scan; and

$\Delta t$     is the time interval, in each scan, between the scanning of the said immediately preceding pixel and the scanning of the said pixel concerned;

and image storage means operatively connected to the said correction means for storing the resulting corrected data values.

Preferably, the said correction means comprise a multiplication unit for multiplying the image-data value $S_{n-1}$ by a constant value equal to $\exp[-\Delta t/\tau]$, and a subtraction unit for subtracting the resulting product ($S_{n-1} \exp[-\Delta t/\tau]$) from the image-data value $S_n$.

Reference will now be made to the accompanying drawings in which:

Fig. 1 is a basic structural view of a conventional digital X-ray image read apparatus;

Fig. 2 is a basic structural view of a digital X-ray image read apparatus according to an embodiment of the present invention;

Fig. 3 is a detailed block diagram of a correction unit shown in Fig. 2;

Fig. 4 is a basic flowchart relating to a correction operation performed in the Fig. 2 apparatus;

Fig. 5 is a view for explaining the relationship between a fluorescent light and an afterglow thereof; and

Fig. 6 is a schematic view of an X-ray image read apparatus applying the present invention.

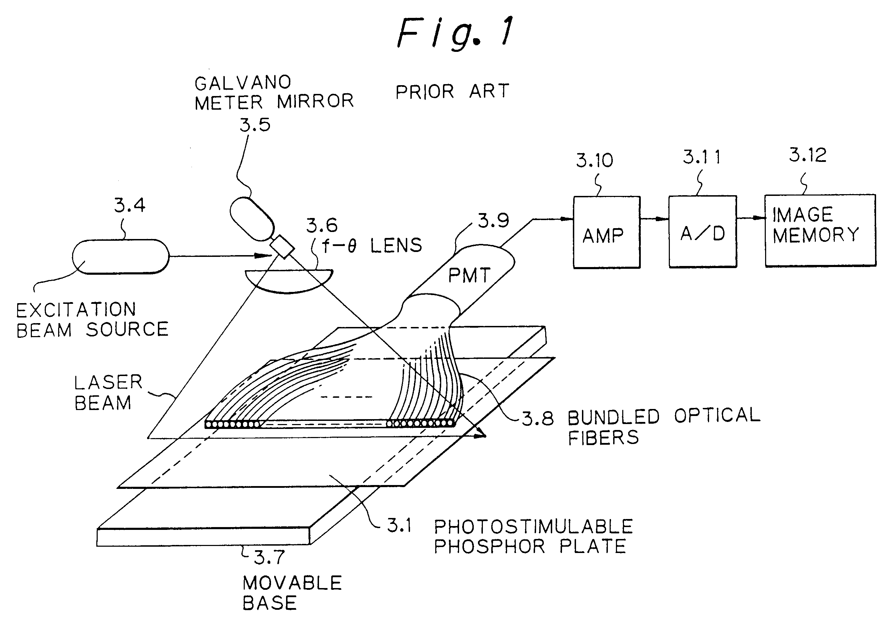

Figure 1 is a basic structural view of a conventional digital X-ray image processing apparatus. In Fig. 1, reference number 3.1 denotes a photostimulable phosphor plate or sheet, 3.4 an excitation beam source, 3.5 a galvanometer mirror, 3.6 an f-θ lens, 3.7 a movable base, 3.8 bundled optical fibers, 3.9 a photomultiplier (PMT), 3.10 an amplifier (AMP), 3.11 an A/D converter (A/D), and 3.12 an image memory.

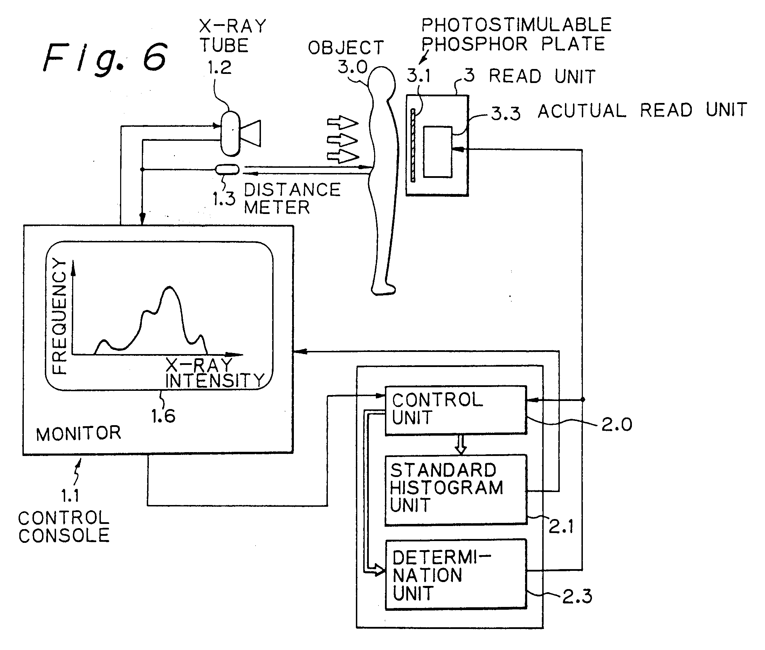

When X-rays are irradiated onto the object 3.0 (see, Fig. 6), the X-rays transmitted through the object 3.0 expose the photostimulable phosphor plate 3.1. When the photostimulable phosphor plate 3.1 is scanned by an excitation beam (for example, a laser beam) emitted from the beam source 3.4 through the f-θ lens 3.6, the energy accumulated on the fluorescence body is excited by the laser beam and the fluorescent light corresponding to the accumulated energy is emitted from the photostimulable phosphor plate 3.1.

The fluorescent light is collected by collection equipment, for example, bundled optical fibers 3.8, and converted to an analog electrical signal by the photomultiplier 3.9. Further, the analog electrical signal is multiplied by the photomultiplier 3.9 and converted to digital signals by the A/D converter 3.11 to obtain the digital X-ray image on the CRT. The digital X-ray image is stored in the image memory 3.12.

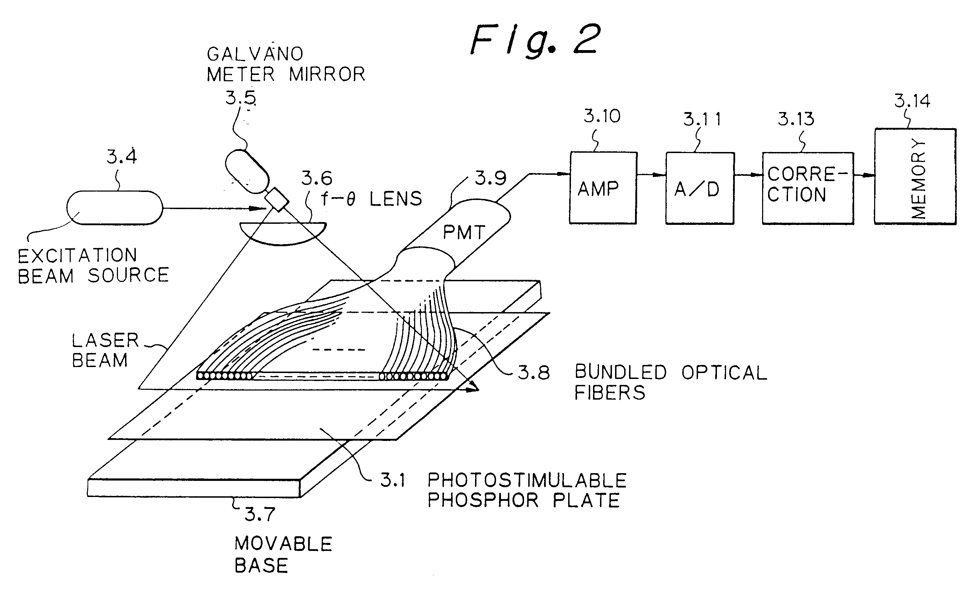

Figure 2 is a basic structural view of a digital X-ray image read apparatus according to an embodiment of the present invention. In Fig. 2, the same reference numbers as shown in Fig. 1 are attached to the same components in Fig. 2. In this embodiment, reference number 3.13 denotes a correction unit for correcting the X-ray image, and 3.14 denotes an image memory. As shown in the drawing, the X-ray image after A/D conversion is corrected by the correction unit 3.13, and the corrected X-ray image is stored in the memory 3.14 as explained in detail below.

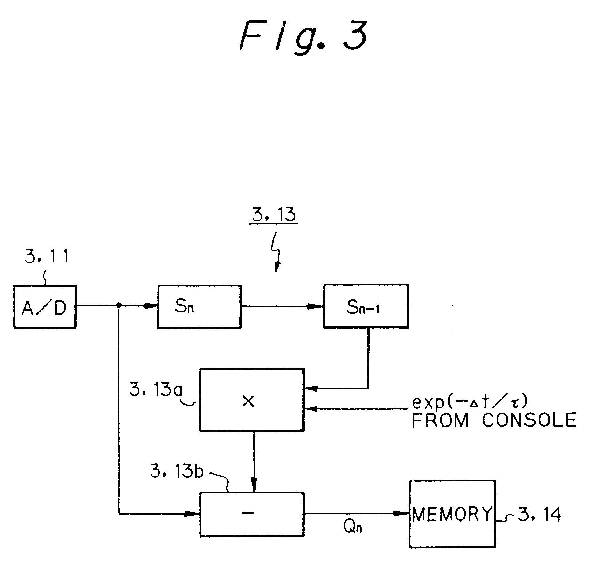

Figure 3 is a detailed block diagram of the correction unit shown in Fig. 2. In Fig. 3, reference number 3.13a denotes a multiplication unit, and 3.13b denotes a subtraction unit. Further, $S_n$ and $S_{n-1}$ denotes shift registers storing image data values converted by the A/D converter 3.11 after being detected by the photomultiplier (PMT) 3.9. Accordingly, the image data values denote respectively the amount of the fluorescent light irradiated from the photostimulable phosphor plate 3.1 for the different picture elements (pixels). In this case, $S_{n-1}$ denotes the image data value for the pixel immediately preceding the pixel having the image data value $S_n$.

Further, $Q_n$ denotes an image data value corrected by the formula "$\exp(-\Delta t/\tau)$", and the corrected image value $Q_n$ is stored in the memory 3.14.

As shown in the drawing and explained in detail below, the correction of each image value is performed by multiplying the constant value $\exp(-\Delta t/\tau)$ by the image value $S_{n-1}$, and by subtracting the resultant data $S_{n-1}\exp(-\Delta t/\tau)$ from the image value $S_n$. As a result, the corrected image value $Q_n$ is obtained from the subtraction unit 3.13b.

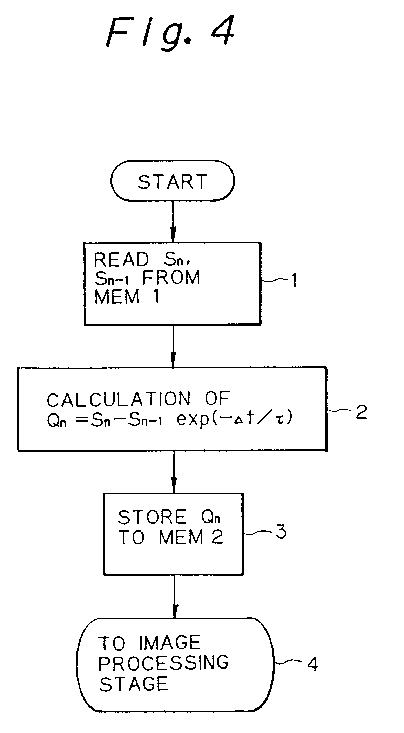

Figure 4 is a basic flowchart of a correction operation according to the present invention. These calculations are performed by software in the correction unit 3.13 using a microprocessor. In this case, the image memory 3.14 is divided into two areas (MEM1, MEM2).

In step 1, the image data values $S_{n-1}$ and $S_n$ are read out from the image area MEM 1 (not shown).

In step 2, the calculation is performed in the multiplication unit 3.13a and the subtraction unit 3.13b to obtain the corrected value $Q_n$.

In step 3, the corrected value $Q_n$ is stored in the image area MEM 2 (not shown).

In step 4, the corrected value $Q_n$ is output to a subsequent stage (not shown) performing image processing.

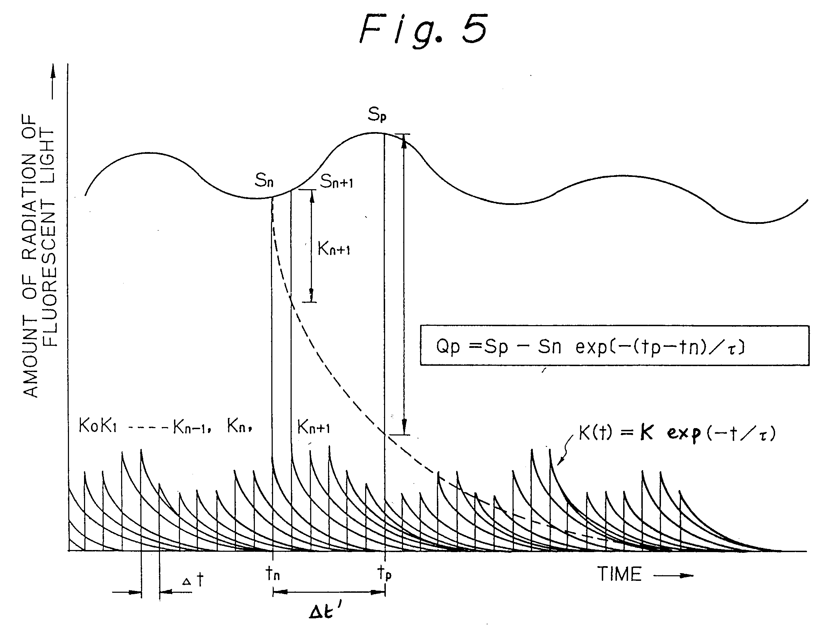

Figure 5 is a view for explaining the relationship between the fluorescent light and the afterglow thereof.

After the excitation beam has been irradiated onto one picture element of the photostimulable phosphor plate, the excitation beam is moved to the next picture element. In this case, the time at the instant of the irradiation of the laser beam is given by "t = 0" and the amount of the fluorescent light at "t = 0" is given by "K".

In this case, the amount of the fluorescent light is gradually reduced with a lapse of time. This gradually reducing fluorescent light is called "afterglow". Accordingly, the change of the afterglow with a lapse of time is expressed by the following formula.

$$K(t) = K \exp(-t/\tau) \tag{1}$$

where t is a time interval, and $\tau$ is a time constant of an attenuation curve.

For example, when the time constant $\tau$ is 0.8 $\mu$sec, and noise level is -60 dB (this value corresponds to 1/1000 of the maximum level of the fluorescent light), the time necessary for reading one picture element is calculated based on the formula (1) as follows.

$$t \fallingdotseq -2.303 \log (1/1000) \times 0.8 \ \mu sec \fallingdotseq 5.5 \ \mu sec$$

Further, assuming that number of the picture elements is, for example, $4 \times 10^6$ dots in the photostimulable phosphor plate and the radiation efficiency of the fluorescent light is $\eta = 0.7$, the whole time necessary for reading all picture elements is given as follows.

$$T = 5.5 \ \mu sec \times 4 \times 10^6 / 0.7 \fallingdotseq 30 \ sec$$

As is obvious from above calculation, a very long time is necessary for reading all picture elements in the conventional art.

Accordingly, the object of the present invention lies in the correction of the afterglow so that it is possible to reduce the read time for the X-ray image. Next, the basic aspect of the present invention will be explained below.

In Fig. 5, the ordinate denotes an amount of radiation of fluorescent light, and the abscissa denotes a lapse of time. The values $K_0$, $K_1$, ... $K_{n-1}$, $K_n$, $K_{n+1}$ denote the amounts of fluorescent light emitted respectively by the different picture elements following X-ray irradiation of the picture elements.

As explained above, when the excitation beam is irradiated onto a picture element, the amount of light $K_n$ is gradually reduced and results in the afterglow. Each occurrence of afterglow is expressed by the curve "$K(t) = K \exp(-t/\tau)$" as shown by the formula (1), where K is the initial value for the picture element concerned and $\tau$ is the time required for the amount of light to fall to 1/e of that initial value.

Further, when the amount of radiation of the fluorescent light at the time $t_n$ detected by the PMT 3.9 (i.e. the image data value as explained above) is expressed by $S_n$, the image data value $S_{n-1}$ is given by the following formula.

$$S_{n-1} = K_0 \exp(-(n-1)\Delta t/\tau) + K_1 \exp(-(n-2)\Delta t/\tau) + ... + K_{n-2} \exp(-\Delta t/\tau) + K_{n-1} \tag{2}$$

When the detected amount of the radiation of the fluorescent light after the time $\Delta t$ is expressed by $S_n$, the image data value $S_n$ is given by the following formula.

$$S_n = K_0 \exp(-(n)\Delta t/\tau) + K_1 \exp(-(n-1)\Delta t/\tau) + ... + K_{n-1} \exp(-\Delta t/\tau) + K_n \tag{3}$$
$$= S_{n-1} \exp(-\Delta t/\tau) + K_n$$

Accordingly, it can be seen from formula (3) that a corrected value $K_n$ of the light emitted by the picture element n can be obtained based on the measured value $S_n$ for the picture element n and the measured value $S_{n-1}$ for the immediately-preceding picture element n-1:

$$K_n = S_n - S_{n-1} \exp [-\Delta t/\tau] \tag{4}$$

The time interval $\Delta t$ is not fixed and, as shown in Fig. 5, a larger interval $\Delta t'(=t_p - t_n)$ may be chosen. In this case the formula (4) is modified as follows:

$$Q_p = S_p - S_n \exp [-(t_p - t_n)/\tau] \tag{5}$$

where:

the picture element n immediately precedes the picture element p in the scanning sequence;
$t_n$ is the time instant at which the light emitted by the picture element n is sampled;
$t_p$ is the time instant at which the light emitted by the picture element p is sampled;
$S_n$ is the measured value of the light emitted by the picture element n at time $t_n$;

$S_p$ is the measured value of the light emitted by the picture element p at time $t_p$; and

$\tau$ is the time required for the amount of light emitted by each picture element to fall to 1/e of its initial value.

Accordingly, as shown in Fig. 5, in general, the formula (5) is obtained when the sampling interval $\Delta t$ is between the time $t_n$ and $t_p$. As a result, it is possible to correct the influence of the afterglow based on the formula (5).

Fig. 6 is a schematic view of an X-ray image read apparatus embodying the present invention. In Fig. 6, reference numeral 1.1 denotes a control console for controlling the supply voltage and current for an X-ray tube, an irradiation time of the X-ray, a multiplication rate of the photomultiplier, an amplification rate of the amplifier, and a distance between the object and the X-ray tube. Further, various calculation commands for the formulae (1) to (5) are input from the control console 1.1.

Further, reference numeral 1.2 denotes the X-ray tube, 1.3 an ultrasonic distance meter, and 1.6 a monitor image of the X-ray displayed on the CRT. In the drawing, a histogram is shown as one example of the monitor image. Reference number 2.0 denotes a control unit. The control unit 2.0 includes the correction unit 3.13 and a microprocessor (not shown). The microprocessor includes a sampling means for sampling the amount of the fluorescent light S at time intervals of $\Delta t$ ($\Delta t$ is, for example, $t_p$-$t_n$), and a calculation means for calculating the corrected image value $Q_p$ (when $\Delta t$ is between $t_n$ and $t_p$) based on the above-indicated formula (5), namely:

$$Q_p = S_p - S_n \exp(-(t_p-t_n)/\tau)$$

2.1 is a standard histogram storage unit for storing various histograms (see, graph in the monitor image), and 2.3 is a determination unit for determining read conditions at the actual read when diagnosing the object. Still further, reference number 3 denotes a read unit, 3.0 an object, 3.1 a photostimulable phosphor plate, and 3.3 an actual read unit.

The above various data are transmitted to the control unit 2.0 as the photographic conditions. Further, the distance data from the distance meter 1.3 is also transmitted to control unit 2.0. The control unit 2.0 selects one of the standard histograms in accordance with the above photographic conditions. This selected standard histogram is displayed on the monitor 1.6. In this embodiment, the selected standard histogram indicating the relationship between the intensity of the X-ray (abscissa) and the frequency thereof (ordinate) is displayed on the monitor 1.6 based on the above photographic conditions.

## Claims

1. Apparatus for reading an X-ray image recorded on a photostimulable phosphor plate, including:

an excitation beam generation source (3.4) for causing an excitation beam to scan repeatedly over such a plate, so as to be incident at different times at different points on the plate in the course of each scan, such scanning serving to stimulate emission by the plate of fluorescent light in dependence upon the image information of pixels of the said X-ray image corresponding respectively to the said different points on the plate;

light collection means (3.8) for collecting the fluorescent light emitted from the plate during such scanning;

photomultiplier means (3.9) connected to the said light collection means for multiplying the collected fluorescent light and for converting the multiplied collected light corresponding to the image information of each pixel in turn into an electrical signal; and

an analog-to-digital converter (3.11) operatively connected to the photomultiplier means (3.9) for converting the resulting electrical signals into corresponding digital image-data values ($S_{n-1}$, $S_n$, ...) representative of the said image information of the said pixels;

characterised by correction means (3.13) operatively connected to the said analog-to-digital converter (3.11) and operable to produce a corrected data value $Q_n$ for each pixel based on the formula

$$Q_n = S_n - S_{n-1} \exp[-\Delta t/\tau]$$

where:

$\tau$      is the time constant for attenuation of an afterglow of the photostimulable phosphor plate;

$S_n$      is the image-data value for the pixel concerned as measured in each scan of the plate;

$S_{n-1}$      is the image-data value for the pixel immediately preceding the pixel concerned as measured in each scan; and

$\Delta t$      is the time interval, in each scan, between the scanning of the said immediately preceding pixel and the scanning of the said pixel concerned;

and further characterised by image storage means (3.14) operatively connected to the said correction means (3.13) for storing the resulting corrected data values.

2. Apparatus as claimed in claim 1, wherein the said correction means (3.13) comprise a multiplication unit (3.13a) for multiplying the image-data value $S_{n-1}$ by a constant value equal to $\exp[-\Delta t/\tau]$, and a subtraction unit (3.13b) for subtracting the resulting product ($S_{n-1}\exp[-\Delta t/\tau]$) from the image-data value $S_n$.

## Patentansprüche

1. Vorrichtung zum Lesen eines auf einer photostimulierbaren Phosphorplatte aufgezeichneten Röntgenbildes, enthaltend:

eine Anregungsstrahl-Erzeugungsquelle (3.4) zum Veranlassen, daß ein Anregungsstrahl wiederholt über solch eine Platte scant, um in dem Verlauf jedes Scannens zu verschiedenen Zeiten an verschiedenen Punkten auf die Platte aufzutreffen, wobei ein solches Scannen dazu dient, eine Emission durch die Platte von Fluoreszenzlicht in Abhängigkeit von der Bildinformation von Pixeln des Röntgenbildes, entsprechend jeweils den verschiedenen Punkten auf der Platte, zu stimulieren;
Lichtsammelmittel (3.8) zum Sammeln des von der Platte während eines solchen Scannens emittierten Fluoreszenzlichts;
Photovervielfachermittel (3.9), das mit dem Lichtsammelmittel verbunden ist, zum Vervielfachen des gesammelten Fluoreszenzlichts und zum Umwandeln des vervielfachten gesammelten Lichts, das der Bildinformation jedes Pixels der Reihe nach entspricht, in ein elektrisches Signal; und
einen Analog/Digital-Wandler (3.11), der mit dem Photovervielfachermittel (3.9) betriebsfähig verbunden ist, zum Umwandeln der resultierenden elektrischen Signale in entsprechende digitale Bilddatenwerte ($S_{n-1}$, $S_n$, ...), die die Bildinformation der Pixel darstellen;

gekennzeichnet durch Korrekturmittel (3.13), die mit dem Analog/Digital-Wandler (3.11) betriebsfähig verbunden und betreibbar sind, um einen korrigierten Datenwert $Q_n$ für jedes Pixel beruhend auf der Formel

$$Q_n = S_n - S_{n-1}\exp[-\Delta t/\tau]$$

zu erzeugen, worin:

$\tau$ die Zeitkonstante für eine Abschwächung eines Nachleuchtens der photostimulierbaren Phosphorplatte ist;
$S_n$ der Bilddatenwert für das betreffende Pixel ist, wie er bei jedem Scannen der Platte gemessen wird;
$S_{n-1}$ der Bilddatenwert für das dem betreffenden Pixel unmittelbar vorhergehende Pixel ist, wie er bei jedem Scannen gemessen wird; und
$\Delta t$ das Zeitintervall, bei jedem Scannen, zwischen dem Scannen des unmittelbar vorhergehenden Pixels und dem Scannen des betreffenden Pixels ist;

und ferner gekennzeichnet durch ein Bildspeichermittel (3.14), das mit den Korrekturmitteln (3.13) betriebsfähig verbunden ist, zum Speichern der resultierenden korrigierten Datenwerte.

2. Vorrichtung nach Anspruch 1, worin die Korrekturmittel (3.13) eine Multiplikationseinheit (3.13a) zum Multiplizieren des Bilddatenwertes $S_{n-1}$ mit einem konstanten Wert, der gleich $\exp[-\Delta t/\tau]$ ist, und ein Subtraktionsmittel (3.13b) zum Subtrahieren des resultierenden Produkts ($S_{n-1}\exp[-\Delta t/\tau]$) von dem Bilddatenwert $S_n$ umfassen.

## Revendications

1. Appareil pour lire une image de rayons X enregistrée sur une plaque luminophore photo-stimulable, comprenant :

une source de génération de faisceaux d'excitation (3.4) pour provoquer répétitivement un balayage d'un faisceau d'excitation sur une telle plaque, afin d'être incident à des instants différents à des points différents sur la plaque au cours de chaque balayage, ce balayage servant à stimuler une émission par la plaque de lumière fluorescente en fonction des informations d'image de pixels de ladite image de rayons X correspondant respectivement audits différents points sur la plaque ;
un moyen de collecte de lumière (3.8) pour collecter la lumière fluorescente émise par la plaque pendant ce balayage ;

un moyen photo-multiplieur (3.9) raccordé audit moyen de collecte de lumière pour multiplier la lumière fluorescente collectée et pour convertir la lumière collectée multipliée correspondant aux informations d'images de chaque pixel à son tour en un signal électrique ; et

un convertisseur analogique à numérique (3.11) raccordé fonctionnellement au moyen photo-multiplieur (3.9) pour convertir les signaux électriques résultants en valeurs de données d'images numériques correspondantes ($S_{n-1}$, $S_n$, ...) représentatives desdites informations d'images desdits pixels ;

caractérisé par un moyen de correction (3.13) raccordé fonctionnellement audit convertisseur analogique à numérique (3.11) et utilisable pour produire une valeur de données corrigée $Q_n$ pour chaque pixel sur la base de la formule

$$Q_n = S_n - S_{n-1} \exp[-\Delta t / \tau]$$

où :

$\tau$ est la constante de temps pour l'atténuation d'une rémanence de la plaque luminophore photo-stimulable ;
$S_n$ est la valeur de données d'images pour le pixel concerné comme mesurée dans chaque balayage de la plaque ;
$S_{n-1}$ est la valeur de données d'images pour le pixel précédant immédiatement le pixel concerné comme mesurée dans chaque balayage ; et
$\Delta t$ est l'intervalle de temps, dans chaque balayage, entre le balayage dudit pixel immédiatement précédent et le balayage dudit pixel concerné ;

et caractérisé de plus par un moyen de stockage d'image (3.14) raccordé fonctionnellement audit moyen de correction (3.13) pour stocker les valeurs de données corrigées résultantes.

2. Appareil selon la revendication 1, dans lequel ledit moyen de correction (3.13) comprend une unité de multiplication (3.13a) pour multiplier la valeur de données d'images $S_{n-1}$ par une valeur constante égale à $\exp[-\Delta t / \tau]$, et une unité de soustraction (3.13b) pour soustraire le produit résultant ($S_{n-1} \exp[-\Delta t / \tau]$) de la valeur de données d'images $S_n$.

Fig. 1

PRIOR ART

3.12 IMAGE MEMORY

3.11 A/D

3.10 AMP

3.9 PMT

3.6 f−θ LENS

3.5 GALVANO METER MIRROR

3.4 EXCITATION BEAM SOURCE

LASER BEAM

3.8 BUNDLED OPTICAL FIBERS

3.1 PHOTOSTIMULABLE PHOSPHOR PLATE

3.7 MOVABLE BASE

Fig. 2

# $Fig. 3$

# Fig. 4

```
        ┌─────────────┐
        │    START    │
        └─────────────┘
               │
               ▼
        ┌─────────────────┐
        │ READ Sn,        │
        │ Sn-1 FROM       │──1
        │ MEM 1           │
        └─────────────────┘
               │
               ▼
  ┌─────────────────────────────────┐
  │ CALCULATION OF                  │
  │ Qn =Sn−Sn-1 exp(−Δt/τ)          │──2
  │                                 │
  └─────────────────────────────────┘
               │
               ▼
        ┌─────────────────┐
        │ STORE Qn        │
        │ TO MEM 2        │──3
        └─────────────────┘
               │
               ▼
        ┌─────────────────┐
        │ TO IMAGE        │
        │ PROCESSING      │──4
        │ STAGE           │
        └─────────────────┘
```

Fig. 5

$$Qp = Sp - Sn\ exp(-(tp-tn)/\tau)$$

$$K(t) = K\ exp(-t/\tau)$$

AMOUNT OF RADIATION OF FLUORESCENT LIGHT

EP 0 422 817 B1

# Fig. 6

X-RAY TUBE 1.2

OBJECT 3.0

PHOTOSTIMULABLE PHOSPHOR PLATE 3.1

3 READ UNIT

3.3 ACUTUAL READ UNIT

1.3 DISTANCE METER

FREQUENCY

X-RAY INTENSITY

1.6

MONITOR

1.1 CONTROL CONSOLE

CONTROL UNIT

2.0

STANDARD HISTOGRAM UNIT

2.1

DETERMI-NATION UNIT

2.3

EP 0 422 817 B1